# EUROPÄISCHE PATENTSCHRIFT

(11) **EP 1 965 049 B1**
(45) Veröffentlichungstag und Bekanntmachung des Hinweises auf die Patenterteilung: **12.09.2012**
(21) Anmeldenummer: 08100855.9
(22) Anmeldetag: 24.01.2008
(51) Int. Cl.: F01N 3/20, F01N 3/36

(54) **Eisdruckfeste Eindosiervorrichtung mit elastischer Schicht**
Ice pressure-proof metering device with elastic layer
Dispositif de dosage unique protégé contre la pression de la glace doté d'une couche élastique

(30) Priorität: 02.03.2007 DE 102007010185
(43) Veröffentlichungstag der Anmeldung: 03.09.2008
(73) Patentinhaber: ROBERT BOSCH GMBH, 70442 Stuttgart (DE)
(72) Erfinder: Prasser, Thomas, 71384, Weinstadt (DE); Buerglin, Markus, 71254, Ditzingen (DE)

(56) Entgegenhaltungen:
- WO-A-02/13951
- WO-A-2006/108419
- DE-A1- 3 803 374
- DE-A1- 10 344 898
- JP-A- 6 017 955

## Beschreibung

### Stand der Technik

Zur Entstickung von Abgasen, die von Verbrennungsmotoren stammen, insbesondere von Dieselmotoren, wird in den Abgasstrang des Verbrennungsmotors wässrige Harnstofflösung eingebracht. In einem nachgeschalteten SCR-Katalysator werden dadurch die Stickoxide zu molekularem Stickstoff und zu Wasser reduziert.

Wässrige Harnstofflösung, die als Reduktionsmittel verwendet wird, hat einen Gefrierpunkt bei ungefähr -11°C und dehnt sich, ähnlich Wasser, beim Übergang von der flüssigen in die feste Phase mit einer Volumenzunahme von ca. 9 % aus. Daher müssen Maßnahmen getroffen werden, die dauerhafte Deformationen von Teilen des Reduktionsmittel-Einspritzsystems verhindern.

Eine Vorgehensweise besteht darin, mit einer in dem Einspritzsystem vorhandenen Pumpe die Schläuche und die Ventile nach dem Entstickungsbetrieb durch Belüften zu entleeren, so dass die Volumenausdehnung durch Einfrieren die jeweiligen Komponenten nicht beeinträchtigt. Der Belüftungsvorgang muss jedes Mal nach dem Abstellen des Verbrennungsmotors durchgeführt werden und erfordert einen deutlichen Aufwand.

Eine weitere Vorgehensweise besteht darin, die Volumenzunahme des sich beim Phasenübergang ausdehnenden Reduktionsmittels durch elastische Bauelemente auszugleichen. So beschreibt die Anmeldung DE 100 58 015 das Vorsehen einer Membran, die an ein gasgefülltes Volumen angrenzt, wobei die Membran die Volumenzunahme auffangen kann. Anderseits zeigt WO 2006/108419 eine Vermendung von Teflon als Haftschutg in einer Harnstoff-Eindosiervorrichtung. Offenbarung der Erfindung

Die Erfindung vermeidet Entlüftungsvorgänge und Bauelemente, die hierzu notwendig sind. Ferner genügt die vorgeschlagene Lösung den hohen Anforderungen beim Einsatz im Motorraum. Insbesondere erlaubt die Erfindung die Ausdehnung des Reduktionsmittels beim Gefrieren dadurch, dass die Kompressionsschicht mit einem geringen Kompressionsmodul ausgeführt wird. Ferner lässt sich durch die Erfindung eine Kaltversprödung bei tiefen Temperaturen, insbesondere bis -40 °C, vermeiden. Zudem wird durch die Erfindung eine hohe Temperaturbeständigkeit erreicht, insbesondere bis zu 200 °C, wobei ferner ein Schmelzen, Fließen, Zersetzen oder andere plastische Formumwandlungen vermieden wird. Dies ist insbesondere beim Einsatz an heißen Abgasrohren erforderlich. Ferner wird durch die erfindungsgemäße Eindosierungsvorrichtung ein Aufquellen durch Kontakt mit dem Reduktionsmittel, d. h. mit der wässrigen Harnstofflösung, beispielsweise AdBlue, vermieden. Die erfindungsgemäße Eindosiervorrichtung ist ferner gegen das verwendete Reduktionsmittel chemisch beständig. Zudem lässt sich die erfindungsgemäße Eindosiervorrichtung leicht herstellen, da alle Komponenten leicht bearbeitbar sind. Ferner bestehen zahlreiche bereits lang erprobte Bearbeitungsverfahren mit dem erfindungsgemäß eingesetzten Werkstoff Teflon. Die erfindungsgemäße Eindosiervorrichtung ist hierbei als Injektor, als druckgesteuerte Düse oder als Magnetventil ausgebildet.

Das der Erfindung zugrunde liegende Konzept sieht vor, den Kompressionskörper zum Auffangen der Volumenänderung des Reduktionsmittels beim Einfrieren aus Teflon auszubilden, vorzugsweise durch geschlossenzellig geschäumtes Teflon oder aus Teflon-Vollmaterial. In einer bevorzugten Ausführungsform wird dem Teflon ein Additiv beigesetzt, das das Kompressionsmodul verringert. Das Kompressionsmodul K ergibt sich zu E / (3 x (1- 2 x µ)), wobei E das E-Modul und µ die Querkontraktionszahl ist. Gegenüber vielen Elastomeren, die eine Querkontraktionszahl nahe 0,5 aufweisen und somit ein zu hohes Kompressionsmodul vorsehen, erlaubt die Verwendung von Teflon das Vorsehen eines geringen Kompressionsmoduls, wobei gleichzeitig ebenfalls das E-Modul einen ausreichend geringen Wert aufweist.

Durch die Verwendung von Teflon kann eine Eindosiervorrichtung verwendet werden, die eisdruckfest ist und gleichzeitig eine Dichtung zu einem gasgefüllten Raum, d. h. gegenüber dem Außenraum vorsieht, die über die gesamte Lebensdauer zu 100 % dicht ist.

Vorzugsweise ist die erfindungsgemäße Eindosiervorrichtung eine druckgesteuerte Düse oder ein Magnetventil, das einen entsprechenden, aus Teflon hergestellten Kompressionskörper zum Ausgleichen der Volumenausdehnung beim Gefrieren aufweist.

Das zum Einbringen von flüssigem Reduktionsmittel in den Abgasstrang verwendete Element wird vorzugsweise als erfindungsgemäße Eindosiervorrichtung vorgesehen, die einen Austritt und einen Zulauf umfasst. Der Austritt ist beispielsweise durch den Druck im Inneren der Eindosiervorrichtung gesteuert, oder ist, im Falle eines Magnetventils, elektrisch gesteuert. Daher ist der Austritt, abhängig vom Betriebszustand, zumindest zeitweise geschlossen. Ferner umfasst die erfindungsgemäße Eindosiervorrichtung einen Zulauf, der zu jeder Zeit mit flüssigem Reduktionsmittel versorgt wird. Zwischen dem verschließbaren Austritt und dem Zulauf ist ein Rückstauvolumen vorgesehen, in dem sich flüssiges Reduktionsmittel sammelt, wenn der Durchfluss am Austritt verringert oder gesperrt ist. Erfindungsgemäß ist das Rückstauvolumen zumindest teilweise von einer Kompressionsschicht umgeben, die aus Teflon ausgebildet ist. Vorzugsweise ist die Kompressionsschicht elastisch und in einer Dicke ausgebildet, die mindestens der anzunehmenden Volumenzunahme während des Phasenübergangs des Reduktionsmittels entspricht.

Ein Injektor, eine druckgesteuerte Düse und ein Magnetventil weisen jeweils mindestens einen Zulauf und mindestens einen Austritt auf, wobei der Fluss durch den Austritt gesteuert werden kann und sich so ein Rückstau bilden kann. Da ein Injektor, eine druckgesteuerte Düse oder ein Magnetventil baubedingt einen Zulauf aufweisen, der in einem gewissen Abstand zum Austritt vorgesehen ist, ist bei derartigen Bauelementen immer zwischen dem Austritt und dem Zulauf ein Volumen vorgesehen, das mit flüssigem Reduktionsmittel gefüllt sein kann.

Vorzugsweise grenzt die Kompressionsschicht direkt an das Rückstauvolumen an und umgreift dies vollumfänglich. In einer weiteren Ausführung umgreift die Kompressionsschicht das Rückstauvolumen nicht um den gesamten Umfang, sondern nur über einen Winkelabschnitt, beispielsweise 180°, und bildet einen Halb-Hohlzylinder.

Gemäß einer bevorzugten Ausführung der Erfindung ist die Kompressionsschicht in sich geschlossen und hat eine zylindrische Form. Daher umfasst die Kompressionsschicht eine zylindrische Innenfläche, die vorzugsweise das Rückstauvolumen in einer tangentialen Umlaufrichtung um das Rückstauvolumen, d. h. entlang der zylindrischen Innenfläche, begrenzt.

Vorzugsweise ist die Kompressionsschicht als Hohlzylinder ausgebildet, der einen kreisförmigen bzw. ringförmigen Querschnitt bei konstanter Dicke aufweist. Mit anderen Worten ist die Außenfläche vorzugsweise konzentrisch mit der Innenfläche der Kompressionsschicht ausgebildet. Die Innenfläche entspricht vorzugsweise der umlaufenden Außenfläche des Rückstauvolumens. Alternativ kann zwischen dem Hohlzylinder und dem Rückstauvolumen eine weitere elastische Schicht vorgesehen sein, um beispielsweise die Montage zu vereinfachen oder ein besonders hohen Grad an Abdichtung zu erreichen.

Gemäß einer weiteren erfindungsgemäßen Ausführung umfasst die Eindosiervorrichtung ein Befestigungselement, beispielsweise ein um die Eindosiervorrichtung laufendes Gewinde oder Flanschelemente, um die Eindosiervorrichtung in einem Abgasstrang zu befestigen. Der Abgasstrang umfasst eine Wand, vorzugsweise in zylindrischer Form, an die die Eindosiervorrichtung derart befestigt werden kann, dass der Austritt in dem Abgasstrang liegt, so dass der Austrittsraum, der von der Wand umschlossen wird, mit Flüssigkeit beaufschlagt werden kann. Gleichzeitig ist die Eindosiervorrichtung in montierter Form derart zu der Wand angeordnet, dass der Zulauf außerhalb des Austrittsraums liegt. Somit kann der Austrittsraum abgeschlossen vorgesehen werden, so dass ein in dem Austrittsraum befindliches Gas, beispielsweise Abgas, nicht auf die andere Seite der Wand austreten kann.

Die Kompressionsschicht ist vorzugsweise aus Tefton-Vollmaterial hergestellt oder aus Teflon, das geschlossenzellig geschäumt ist. Vorzugsweise umfasst das Teflon Zusatzstoffe, die das Kompressionsmodul des Teflons geeignet herabsetzen und somit die elastische Aufnahme des Expansionsvolumens der umschlossenen Flüssigkeit beim Gefrieren ermöglichen, ohne die restlichen Komponenten übermäßigem Druck auszusetzen.

Die erfindungsgemäße Eindosiervorrichtung umfasst eine Kompressionsschicht aus Teflon. Ferner kann die erfindungsgemäße Eindosiervorrichtung mehrere übereinander liegende Kompressionsschichten oder Kompressionselemente aus Teflon umfassen, die vorzugsweise aneinander grenzen. Der Kompressionskörper kann ferner mehrere Lagen oder Abschnitte aus Teflon umfassen, die unterschiedliche Zusatzstoffe bzw. Additive aufweisen, verschiedene Zellgrößen aufweisen, wobei einige Abschnitte oder Schichten aus Teflon-Vollmaterial ausgebildet sein können, und einige aus geschäumtem Teflon vorgesehen sein können.

In dieser Anmeldung wird als Teflon PTFE, Polytetrafluorethen, bezeichnet. Alternativ oder in Kombination zu Teflon kann die Kompressionsschicht teilweise oder vollständig auch aus PFA bzw. aus einem oder einer Kombination von Perfluoralkoxy-Copolymeren ausgebildet sein. Die Verwendung von PFA führt zu einer Kompressionsschicht mit geringer Kaltflussfähigkeit.

Ferner kann die Kompressionsschicht aus PTFE-Sinterwerkstoff oder aus PFA-Sinterwerkstoff oder aus einer Mischung hieraus vorgesehen sein. Das zur Ausbildung der Kompressionsschicht verwendete Material weist vorzugsweise eine hohe Elastizität und nur eine geringe Plastizität auf, so dass auch mehrfach wiederholtes Pressen der Kompressionsschicht nicht zur dauerhaften Verformung der Kompressionsschicht führt. Vorzugsweise weist das Material eine geringe Kaltflussfähigkeit auf.

Die Abmessungen der Kompressionsschicht, insbesondere die Dicke der Kompressionsschicht, berücksichtigen vorzugsweise das Rückstauvolumen, insbesondere den Innendurchmesser der Kompressionsschicht, so dass die Elastizität der Kompressionsschicht eine Volumenzunahme von ca. 9 % - 10 % ermöglicht, ohne dass dauerhafte Verformungen bzw. plastische Veränderungen in der Eindosiervorrichtung und in der Kompressionsschicht auftreten. Mit anderen Worten ist die Kompressionsschicht so dimensioniert, dass sie nahezu die gesamte Volumenzunahme bzw. das Expansionsvolumen aufnehmen kann, ohne die anderen Komponenten einem Druck auszusetzen, der zu bleibenden elastischen Verformungen der Ventilkomponenten führt.

### Kurze Beschreibung der Zeichnungen

Ausführungsbeispiele der Erfindung sind in den Zeichnungen dargestellt und in der nachfolgenden Beschreibung näher erläutert. Es zeigen
- Figur 1: einen Längsschnitt durch eine erfindungsgemäße Eindosiervorrichtung; und
- Figur 2: einen Querschnitt durch eine erfindungsgemäße Eindosiervorrichtung.

### Ausführungsformen:

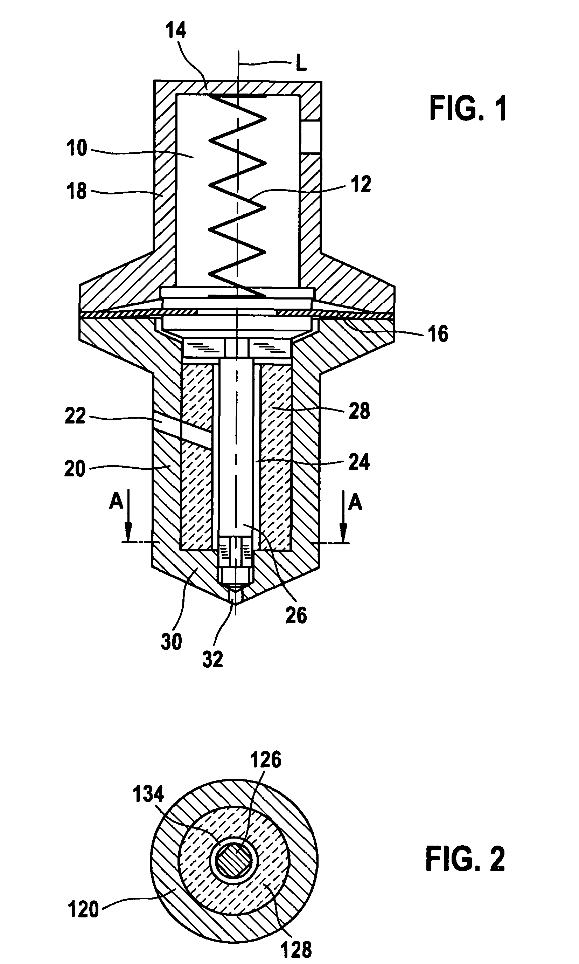

Die Figur 1 zeigt eine Ausführungsform einer erfindungsgemäßen Eindosiervorrichtung, die als Injektor ausgebildet ist. Der Injektor ist entlang einer Längsachse L rotationssymmetrisch ausgebildet und weist einen Innenraum auf. In einem oberen Abschnitt 10 des Innenraums ist eine Druckfeder 12 vorgesehen, die zwischen einer oberen Kopfwand 14 und einer Membran 16 vorgesehen ist. Die Membran verläuft parallel zu der oberen Kopfwand und umschließt, zusammen mit einer Außenwand 18, den oberen Abschnitt 10 der Eindosiervorrichtung. Die Außenwand 18 sowie die obere Kopfwand 14 sind vorzugsweise aus Metall ausgebildet.

Die in Figur 1 dargestellte Ausführung der erfindungsgemäßen Eindosiervorrichtung weist ferner eine unteren Abschnitt auf, der einen Düsenkörper 20 umfasst. In dem Düsenkörper 20 ist ein Zulauf 22 vorgesehen, der in einen Innenraum mündet. In dem Innenraum ist eine Düsennadel 26 und ein Rückstauvolumen 24 vorgesehen, in dem sich wässriges Reduktionsmittel sammeln kann. Um das Rückstauvolumen 24 herum ist zylindrisch und in koaxialer Anordnung eine Kompressionsschicht 28 vorgesehen, die das Rückstauvolumen 24 sowie die Düsennadel 26 umfänglich umgreift. Die Zuleitung 22 durchstößt die Kompressionsschicht in einer zur Längsachse L geneigten Richtung. Vorzugsweise sind der Zulauf und der Austritt in Fluidkommunikation mit dem Rückstauvolumen. Die Düsennadel ist ferner mit der Membran 16 derart verbunden, so dass die Druckfeder 12 einen Druck auf die Mitte der Membran entlang der Längsachse L der Eindosiervorrichtung ausübt. Die Membran 16 ist vorzugsweise scheibenförmig ausgebildet und dichtet die Außenwand der Eindosiervorrichtung mit der Düsennadel ab. Vorzugsweise ist die Membran 16 aus einem elastischen Werkstoff, beispielsweise einer Gummischicht, ausgebildet. In einer unteren Kopfwand 30, die am entgegengesetzten Ende der oberen Kopfwand 14 angeordnet ist, ist ein Austritt 32 vorgesehen, durch den eine Flüssigkeit austreten kann, die zuvor durch den Zulauf 22 in das Rückstauvolumen 24 eingebracht wurde. Der Austritt 32 ist vorzugsweise konzentrisch zu der Längsachse L ausgebildet, die durch den Austritt 32 hindurch verläuft.

In eingebautem Zustand verläuft beispielsweise entlang der Ebene A eine Wand (nicht dargestellt) außerhalb der Eindosiervorrichtung, mit der die Eindosiervorrichtung über Befestigungselemente befestigt werden kann. Wenn die Eindosiervorrichtung mit der Wand befestigt ist, dann ragt der Austritt 32 in einen Austrittsraum hinein, der von der Wand umschlossen ist. Die Ebene A, die den Verlauf der Wand kennzeichnet, kann ferner in einer beliebigen Höhe angeordnet sein, muss jedoch zwischen der äußeren Öffnung des Zulaufs 22 und dem Austritt 32 vorgesehen sein. Vorzugsweise verläuft die Wand senkrecht zur Längsachse L.

Erfindungsgemäß ist zwischen dem Rückstauvolumen 24, in das der Zulauf 22 führt, und der Wand 20 des unteren Abschnitts 20 der Eindosiervorrichtung die erfindungsgemäße Kompressionsschicht 28 aus Teflon ausgebildet. Die in Figur 1 dargestellte Kompressionsschicht 28 ist einteilig als Hohlzylinder ausgeführt, kann jedoch auch mehrschichtig konzentrisch vorgesehen sein und/oder einen Querschnitt aufweisen, der sich von einer Kreisform unterscheidet. Die äußere Oberfläche der Kompressionsschicht 28 ist vorzugsweise an die Innenfläche des Düsenkörpers angepasst und entspricht dieser.

Die Figur 2 zeigt den Querschnitt der in Figur 1 dargestellten Ausführung in der Höhe A-A.

Die als Zylinder ausgeführte Eindosiervorrichtung umfasst eine Wand 120 aus Metall, die eine Kompressionsschicht 128 umschließt, deren Außenfläche direkt an die Innenfläche der Wand 120 angrenzt. Die Kompressionsschicht 128 umfasst ein Rückstauvolumen 134 in dem Flüssigkeit verbleiben kann. In der Mitte der Eindosiervorrichtung ist die Dosiernadel 126 vorgesehen, deren Außenfläche zusammen mit der Innenfläche der Kompressionsschicht das Rückstauvolumen 134 in radialer Richtung begrenzt.

Die Abmessungen der Kompressionsschicht sind derart vorgesehen, dass bei einer Volumenzunahme von 9 % - 10 % des Rückstauvolumens die Kompressionsschicht einen Teil der Verformung elastisch aufnehmen kann, ohne das auf die Außenwand 20, 120 Kräfte wirken, die diese plastisch verformen. Die in den Figuren 1 und 2 dargestellten Ausführungen sind nicht maßstabsgetreu dargestellt. Insbesondere kann die Dicke der Kompressionsschicht zu den Abmessungen des Volumens, das die Außenwand 20, 120 begrenzt, und zu den Abmessungen des Rückstauvolumens vorgesehen sein, um die Ausdehnung beim Phasenübergang des Reduktionsmittels innerhalb des Rückstauvolumens geeignet auffangen zu können. Vorzugsweise werden die einzelnen Merkmale der Eindosiervorrichtung mit Abmessungen vorgesehen, die es unter Berücksichtigung des Kompressionsmoduls der Kompressionsschicht erlauben, dass nur ein geringer Anteil der Volumenänderung in einer Verformung der metallischen Außenwand 20, 120 resultiert und der Großteil der Volumenänderung zu einer elastischen Verformung der Kompressionsschicht führt, so dass der durch die Volumenzunahme hervorgerufene Druck auf die Außenwand 20, 120 gering ist und nicht zu Beeinträchtigungen des Betriebs der Eindosiervorrichtung führt.

Die Kompressionsschicht ist vorzugsweise wärmeleitend und/oder umfasst eine Heizschlaufe, die das Erwärmen des Rückstauvolumens ermöglicht, um das dort vorgesehene Reduktionsmittel in den flüssigen Zustand zu überführen. Zur Erwärmung des Rückstauvolumens kann ein Teil der Leistung verwendet werden, die zur Betätigung der Eindosiervorrichtung verwendet wird. Vorzugsweise umfasst die Eindosiervorrichtung ein Betätigungselement, das die Düsennadel 26 betätigt, und dessen Abwärme gleichzeitig zur Temperaturerhöhung in Rückstauvolumen führt.

Ferner können zwischen der Innenwand und der Außenwand der Kompressionsschicht Stege aus Teflon-Vollmaterial oder geschäumten Teflon vorgesehen sein, so dass die Kompressionsschicht leichter elastisch verformbar ist. Zur Abdichtung sind sowohl Innenwand als auch Außenwand durchgängig aus einem elastischen Material, beispielsweise aus Teflon oder in Form einer Gummischicht ausgebildet. Dieses elastische Material kann einteilig mit den Stegen ausgebildet sein oder kann mittels Klebung oder Schmelzverbund daran befestigt sein. Im letzteren Fall können die Stege aus dem gleichen oder aus einem anderen Material als die Innen- bzw. Außenwand ausgebildet sein. Die Innen-und die Außenwand können Teil einer Abdichtungsschicht sein.

Das die Kompressionsschicht bildende Teflon umfasst ferner Zusatzstoffe, die den Kaltfluss verringern. Ferner können in dem Teflon Füllstoffe vorgesehen sein, beispielsweise elastische Füllstoffe, die die Härte verringern und Deformationsbeständigkeit erhöhen. Vorzugsweise ist die gesamte Kompressionsschicht so ausgestaltet, dass in einem Temperaturbereich von -40°C und +200°C eine maximale Elastizität gewährleistet bleibt, die bei einer Volumenvergrößerung des Raums, der die Kompressionsschicht umschließt, von 10% zu keiner plastischen Deformation des Körpers führt, der die Kompressionsschicht umgibt. Vorzugsweise tritt in diesem Temperaturbereich keine plastische Verformbarkeit der Kompressionsschicht, beispielsweise durch Schmelzen, auf.

## Patentansprüche

1. Eindosiervorrichtung zum Einbringen von Flüssigkeiten in einen Austrittsraum, wobei die Eindosiervorrichtung einen Austritt (32) mit veränderlichem Durchfluss, einen Zulauf (22) und ein Rückstauvolumen (134) zwischen dem Austritt (32) und dem Zulauf (22) umfasst, **dadurch gekennzeichnet, dass** das Rückstauvolumen (134) von einer Kompressionsschicht (28, 128) zumindest teilweise umgeben ist, die aus einem PTFE und/oder PFA und/oder Perfluoralkoxy-Copolymere enthaltenden Werkstoff ausgebildet ist, und die Kompressionsschicht (28, 128) eingerichtet ist, eine Volumenzunahme des Rückstauvolumens (134) im Falle des Gefrierens der Flüssigkeit aufzunehmen, so dass bleibende Verformungen der Eindosiervorrichtung vermieden werden, wobei die Eindosiervorrichtung als Injektor, druckgesteuerte Düse oder als Magnetventil ausgebildet ist, und eingerichtet ist, Reduktionsmittellösung in einen Abgasstrang eines Verbrennungsmotors dosiert einzubringen, wobei als Reduktionsmittel eine wässrige Harnstofflösung verwendet wird.

2. Eindosiervorrichtung nach Anspruch 1, wobei die Kompressionsschicht (28, 128) direkt an das Rückstauvolumen (134) angrenzt und dieses vollständig umgreift.

3. Eindosiervorrichtung nach Anspruch 1, wobei die Kompressionsschicht (28, 128) in sich geschlossen ist und eine zylindrische Innenfläche umfasst, die das Rückstauvolumen (134) in einer tangentialen Umlaufrichtung begrenzt.

4. Eindosiervorrichtung nach Anspruch 1, wobei die Kompressionsschicht (28, 128) als Hohlzylinder mit kreisförmigem Querschnitt und konstanter Dicke ausgebildet ist, dessen Innenfläche einer Umlauf-Außenfläche des Rückstauvolumens (134) entspricht.

5. Eindosiervorrichtung nach Anspruch 1, die ferner ein Befestigungselement umfasst, um die Eindosiervorrichtung an einer Wand zu befestigen, durch die die Eindosiervorrichtung teilweise hindurch tritt, wobei die Wand den Austrittsraum umgibt und der Austritt (32) in dem Austrittraum angeordnet ist, wenn das Befestigungselement an der Eindosiervorrichtung und an der Wand befestigt ist.

6. Eindosiervorrichtung nach Anspruch 1, wobei die Kompressionsschicht (28, 128) im Falle der Verwendung von PTFE aus PTFE-Vollmaterial, geschlossen geschäumtem PTFE-Material und/oder einem gesintertem PTFE-Material ausgebildet ist.

7. Eindosiervorrichtung nach Anspruch 1, wobei im Falle der Verwendung von PTFE der PTFE-Werkstoff PTFE sowie ein Additiv und/oder einen Füllstoff umfasst, wobei das Additiv und/oder der Füllstoff die Härte und die Elastizität des PTFE-Werkstoffs beeinflussen.

## Claims

1. Metering device for introducing liquids into an outlet chamber, the metering device comprising an outlet (32) with variable through-flow, an inflow (22) and a back-up volume (134) between the outlet (32) and the inflow (22), **characterized in that** the back-up volume (134) is at least partially surrounded by a compression layer (28, 128), which is formed by a material containing PTFE and/or PFA and/or perfluoroalkoxy copolymers, and the compression layer (28, 128) is designed for receiving an increase in volume of the back-up volume (134) in the event of the liquid freezing, so that permanent deformations of the metering device are avoided, the metering device being formed as an injector, pressure-controlled nozzle or solenoid valve and designed for introducing reducing agent solution in a metered manner into an exhaust line of an internal combustion engine, an aqueous urea solution being used as the reducing agent.

2. Metering device according to Claim 1, the compression layer (28, 128) being directly adjacent to the back-up volume (134) and enclosing it completely.

3. Metering device according to Claim 1, the compression layer (28, 128) being of an uninterrupted form and comprising a cylindrical inner surface, which bounds the back-up volume (134) in a tangential enveloping direction.

4. Metering device according to Claim 1, the compression layer (28, 128) being formed as a hollow cylinder with a circular cross section and a constant thickness, the inner surface of which corresponds to an enveloping outer surface of the back-up volume (134).

5. Metering device according to Claim 1, which also comprises a fastening element in order to fasten the metering device to a wall through which the metering device partially passes, the wall surrounding the outlet chamber and the outlet (32) being arranged in the outlet chamber when the fastening element is fastened to the metering device and to the wall.

6. Metering device according to Claim 1, the compression layer (28, 128) being formed in the case where PTFE is used from solid PTFE material, closed-foamed PTFE material and/or a sintered PTFE material.

7. Metering device according to Claim 1, the PTFE material comprising in the case where PTFE is used PTFE and an additive and/or a filler, the additive and/or the filler influencing the hardness and the elasticity of the PTFE material.

## Revendications

1. Dispositif doseur destiné à apporter des liquides dans un espace de sortie, le dispositif doseur présentant une sortie (32) à débit variable, une amenée (22) et un volume de retenue (134) disposé entre la sortie (32) et l'amenée (22),
**caractérisé en ce que**
le volume de retenue (134) est entouré au moins en partie par une couche de compression (28, 128) formée d'un matériau qui contient du PTFE, du PFA et/ou des copolymères perfluoroalcoxylés,
**en ce que** la couche de compression (28, 128) est destinée à compenser une augmentation du volume de retenue (134) en cas de congélation du liquide de manière à éviter des déformations permanentes du dispositif doseur,
**en ce que** le dispositif doseur est configuré comme injecteur, tuyère asservie à la pression ou soupape magnétique et est destiné à apporter de manière dosée une solution d'agent de réduction dans le conduit de gaz d'échappement d'un moteur à combustion interne et
**en ce qu'**une solution aqueuse d'urée est utilisée comme agent de réduction.

2. Dispositif doseur selon la revendication 1, dans lequel la couche de compression (28, 128) est directement adjacente au volume de retenue (134) et englobe complètement ce dernier.

3. Dispositif doseur selon la revendication 1, dans lequel la couche de compression (28, 128) est intrinsèquement fermée et comporte une surface intérieure cylindrique qui délimite le volume de retenue (134) dans la direction périphérique tangentielle.

4. Dispositif doseur selon la revendication 1, dans lequel la couche de compression (28, 128) est configurée comme cylindre creux de section transversale circulaire et d'épaisseur constante dont la surface intérieure correspond à une surface périphérique extérieure du volume de retenue (134).

5. Dispositif doseur selon la revendication 1, comportant en outre un élément de fixation qui fixe le dispositif doseur sur une paroi que le dispositif doseur traverse en partie, la paroi entourant l'espace de sortie et la sortie (32) étant disposée dans l'espace de sortie lorsque l'élément de fixation est fixé sur le dispositif doseur et sur la paroi.

6. Dispositif doseur selon la revendication 1, dans lequel, au cas où du PTFE est utilisé, la couche de compression (28, 128) est formée d'un matériau à base de PTFE massif, d'un matériau à base de PTFE en mousse fermée et/ou d'un matériau à base de PTFE fritté.

7. Dispositif doseur selon la revendication 1, dans lequel au cas où du PTFE est utilisé, le matériau à base de PTFE comporte du PTFE ainsi qu'un additif et/ou une charge, l'additif et/ou la charge agissant sur la dureté et l'élasticité du matériau à base de PTFE.
